# EUROPEAN PATENT APPLICATION

(11) **EP 2 887 562 A1**
(43) Date of publication of application: **24.06.2015**
(21) Application number: 13306770.2
(22) Date of filing: 19.12.2013
(51) Int. Cl.: H04B 7/06, H04B 7/08

(54) **Method to establish mm-wave links with adaptive antennas**

(71) Applicant: ALCATEL LUCENT, 92100 Boulogne-Billancourt (FR)
(72) Inventor: Boccardi, Federico, 20871 Vimercate (MB) (IT); Halbauer, Hardy, 70435 Stuttgart (DE)
(74) Representative: Huber, Meik

(57) **Abstract**

A method for determining beamforming weights for an antenna array is proposed. The method comprises a step of receiving a low-frequency signal. Further, an angle of arrival of the received low-frequency signal is determined. From the determined angle of arrival of the received signal, beamforming weights for a high-frequency antenna array are calculated. Further, a macro cell backhaul node and a small cell base station or user equipment performing the method is proposed.

## Description

### FIELD OF THE INVENTION

The present invention relates to a method and apparatus for determining beamforming weights for an antenna array.

### BACKGROUND OF THE INVENTION

This section introduces aspects that may be helpful in facilitating a better understanding of the invention. Accordingly, the statements of this section are to be read in this light and are not to be understood as admission about what is in the prior art.

When using mm-waves either for e.g. small cell backhaul or access applications, several challenges occur. The communication links usually consist of a direct path (line of sight) and/or few reflected paths, depending on the propagation characteristic of the signal to be transmitted and the environment. MM-wave communication links have pathlosses comparably high due to the high frequency. Thus, high gain, narrow beamwidth antennas for transmission and reception of the data signals must be used to make such a mm-wave link system work successfully. In general for small cell backhaul links, antenna arrays are used to provide the above mentioned characteristics. These antenna arrays comprise a high number of antenna elements, which can be addressed independently and provide an antenna beam which can be flexible steered in different directions.

However, as long as the direction of the strongest path, e.g. the line of sight, is not known, the appropriate beamforming weights for the beam pattern of an antenna array to realize high gain pattern cannot be determined. In the above described scenario, determining the appropriate beamforming weights from channel estimation of the individual antenna elements is difficult due to the low gain of the individual antenna elements compared to the nominal beamforming gain targeted for normal operation. In case of mm-wave links this problem is significant, whereas at lower frequencies, e.g. 2.6 GHz, lower gains and less antenna elements would allow estimation of the beam pattern already from estimates of individual antenna elements.

A solution as known in the art is to use fixed high gain antennas and rotate them to scan all spatial directions around transmitter and receiver location. Such a method is reported, e.g. by M. Samimi, K. Wang, Y. Azar, G. Wong, R. Mayzus, H. Zhao, J. Schulz, S. Sun, F. Gutierrez, T. Rappaport, "28 GHz Angle of Arrival and Angle of Departure Analysis for Outdoor Cellular Communications using Steerable Beam Antennas in New York City", 2013 IEEE Vehicular Technology Conference (VTC), June 2~5, 2013, Dresden, Germany. A channel sounder is used to investigate mm-wave NLOS channels. This method is suitable for channel investigations, but is disadvantageous for operation of a flexible and dynamic communication system.

### SUMMARY OF THE INVENTION

It is an object of the invention to determine initial beamforming weights for an antenna array to realize an antenna pattern with a gain in direction of the strongest path, which is significantly higher than the gain of each individual element of the antenna array.

According to one embodiment of the invention, a method for determining beamforming weights for a high-frequency antenna array is proposed. The method comprises a step of receiving a low-frequency signal with an antenna array for low frequencies. Further, an angle of arrival of the received low-frequency signal is determined. From the determined angle of arrival of the received signal, beamforming weights for a high-frequency antenna array are calculated. The beamforming weights of the high-frequency antenna array define the antenna pattern and thus the direction of main radiation of the high frequency antenna array. This has the advantage that an initial guess for the beamforming weights for the high-frequency antenna array is derived from the low-frequency signal. The angle of arrival of the low-frequency signal indicates the angle of arrival of the high-frequency signal. In line of sight or quasi line of sight communication scenarios, the angle of arrival of the low-frequency signal is the same as the angle of arrival of the high-frequency signal. Large and time consuming scanning algorithms in all spatial directions in order to determine the beam forming weights for the high-frequency antenna array are omitted. Instead, the beamforming weights are determined from the angle of arrival of a low-frequency signal. The angle of arrival of the low-frequency signal can be obtained easily. Thus, the computational power and overall time for determining the beamforming weights of the high-frequency antenna array is reduced significantly. The need for a trial and error scan over all spatial directions is omitted. In one embodiment, a high-frequency communication link is established by using the calculated beamforming weights for the high-frequency antenna array.

In one embodiment, the high-frequency communication link is a backhaul link between a small cell base station and a macro cell backhaul node. For a backhaul link between a small cell base station and a macro cell backhaul node, high data throughput is required and thus, high-frequency links are used. In one embodiment, the high frequency communication link is an access link to a user equipment via a macro cell backhaul node with base station functionality or a small cell base station.

In one embodiment, the beamforming weights are determined by the received physical layer signal at the lower frequency.

In one embodiment, the spatial accuracy of the angle of arrival estimation is further improved by successive measurements at the high frequency. In one embodiment, the calculated beamforming weights for the high-frequency antenna are updated via space-scanning over a reduced space around the direction indicated by the low frequency. The high-frequency communication link to be established is then based on the updated beamforming weights. In one embodiment, the beamforming weights are updated while the high-frequency link is already established. This way, adaptation and improvement of the high-frequency link is possible. By using the initial beamforming weights determined by the angle of arrival of the determined low-frequency signal, sufficient SNR is provided by the high-frequency antenna array to apply tracking and optimization algorithms for further improvement of the beamforming weigths. This allows determining beamforming weights more accurate, but still keeps the optimizing process simple and effective, as reasonable start values are used. The refinement on the beamforming weights is obtained by successive space-scanning. Spatial resolution is improved by using an hierarchical approach for the refinement of the beamforming weights.

In one embodiment, control information generated at a transmitter is received by inspecting the high-frequency communication link. Using this control information, updated beamforming weights are calculated for the high-frequency antenna. This has the advantage that the beamforming weights which are used are inspected at the device to which communication is established. This devices sends feedback about the beamforming weights of the high frequency antenna array and the high-frequency communication link is improved by updating the beamforming weights.

In one embodiment, the received low-frequency signal is an UMTS or LTE signal. In many scenarios, macro cell backhaul base stations and also small cell base stations support multiple standards for mobile communication, e.g. GSM, UMTS and LTE. They are equipped with RF systems to transmit and receive signals corresponding to these standards. Using the RF infrastructure of such base stations for receiving the low-frequency signal has the advantage that no additional hardware equipment has to be provided for performing the method. It is thus cost efficient and can be implemented in a simple way.

In one embodiment, the high-frequency signal is a mm-wave signal. For transmissions between macro cell backhaul nodes and small cell base stations, mm-wave links are advantageous because of the high data throughput on such a link and the frequency spectrum available at such frequencies. In addition, as the base stations do not move with respect to each other, a line of sight link can be established and maintained during transmission.

In one embodiment, the method is performed in a small cell base station. Thus, the received low-frequency signal is received from a macro cell backhaul node at a low-frequency, and the beamforming weights for the high-frequency antenna array of the small cell base station are calculated.

In one embodiment, the method is performed in a user equipment. Thus, the received low-frequency signal is received from a macro cell backhaul node which provides base station functionality at a low-frequency, and the beamforming weights for the high-frequency antenna array of the user equipment are calculated.

In one embodiment, the method is performed in a macro cell backhaul node, e.g. a macro cell base station. Thus, the received low-frequency signal is received from a small cell base station or a user equipment at a low frequency, and the beamforming weights for the high-frequency antenna array of the macro cell backhaul node are calculated.

In one embodiment, the received low-frequency signal includes location information of the transmitter of the received low-frequency signal. The received location information of the transmitter of the received low-frequency signal is used for determining the angle of arrival. Thus, the transmitter informs about his relative position and this information is used for calculating the beamforming weights for the high-frequency antenna array. These beamforming weights enable beamstearing of the high-frequency antenna array in the direction of the transmitter of the low-frequency signal. This is especially advantageous if only the transmitter has a low-frequency antenna array for determining the direction of a received low frequency signal and the device performing the method has e.g. only a low-frequency antenna without a directional discrimination functionality. In case the device performing the method is a user equipment, it is often the case that a cheap low-frequency antenna is used which cannot discriminate the direction of a received signal. With the feedback on the low-frequency communication link, the method for determining beamforming weights can be performed anyway. In one embodiment, the feedback includes GPS coordinates. In one embodiment the feedback includes a set of coordinates over a virtual map.

According to one embodiment of the invention, a macro cell backhaul node comprising a low-frequency antenna and a low-frequency receiver for receiving a low-frequency signal is proposed. The macro cell backhaul node comprises an angle of arrival determining means for determining the angle of arrival of a received signal. In one embodiment, the angle of arrival determining means is a processor which analyzes the received signal and determines the angle of arrival thereof. Further, the macro cell backhaul node comprises a high-frequency antenna array. Further, the macro cell backhaul node comprises a processor for calculating beamforming weights for the high-frequency antenna array from the determined angle of arrival. In one embodiment, the processor for calculating beamforming weights for the high-frequency antenna array is also for calculating updated beamforming weights based on a signal received by the high-frequency antenna array. In one embodiment, the macro cell backhaul node comprises a high-frequency transceiver (receiver/transmitter) for receiving a high-frequency signal from the high-frequency antenna array. The high-frequency transceiver is for establishing a high-frequency communication link using the calculated beamforming weights and at least for receiving and/or transmitting a physical layer signal.

According to one embodiment of the invention, a small cell base station comprising a low-frequency antenna and a low-frequency receiver for receiving a low-frequency signal is proposed. The small cell base station comprises an angle of arrival determining means for determining the angle of arrival of a received signal. In one embodiment, the angle of arrival determining means is a processor which analyzes the received signal and determines the angle of arrival thereof. Further, the small cell base station comprises a high-frequency antenna array. Further, the small cell base station comprises a processor for calculating beamforming weights for the high-frequency antenna array from the determined angle of arrival. In one embodiment, the processor for calculating beamforming weights for the high-frequency antenna array is also for calculating updated beamforming weights based on a signal received by the high-frequency antenna array. In one embodiment, the small cell base station comprises a high-frequency transceiver (receiver/transmitter) for receiving a high-frequency signal from the high-frequency antenna array. The high-frequency transceiver is for establishing a high-frequency communication link using the calculated beamforming weights and at least for receiving and/or transmitting a physical layer signal. In one embodiment, the small cell base station comprises a high-frequency transceiver (receiver/transmitter) for receiving a high-frequency signal from the high-frequency antenna array. The high-frequency transceiver is for establishing a high-frequency communication link using the calculated beamforming weights and at least for receiving and/or transmitting a physical layer signal.

According to one embodiment of the invention, a user equipment comprising a low-frequency antenna and a low-frequency receiver for receiving a low-frequency signal is proposed. The user equipment comprises an angle of arrival determining means for determining the angle of arrival of a received signal. In one embodiment, the angle of arrival determining means is a processor which analyzes the received signal and determines the angle of arrival thereof. In one embodiment, the angle of arrival determining means is a processor using feedback information received on the low-frequency communication link. The feedback information contains information for determining the angle of arrival. Further, the user equipment comprises a high-frequency antenna array. Further, the user equipment comprises a processor for calculating beamforming weights for the high-frequency antenna array from the determined angle of arrival. In one embodiment, the processor for calculating beamforming weights for the high-frequency antenna array is also for calculating updated beamforming weights based on a signal received by the high-frequency antenna array.

According to one embodiment, a wireless communication system is proposed. The wireless communication system comprises a macro cell backhaul node and at least one small cell base station or user equipment, which transfer data via a high-frequency communication link. The macro cell backhaul node is a macro cell backhaul node as described above. In case access is granted to a user equipment, the macro cell backhaul node provides base station functionality as described above. The small cell base station is a small cell base station as described above. The user equipment is a user equipment as described above.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: scenario for mm-wave small cell backhaul uplink establishing or user equipment access uplink establishing
- Fig. 2: setup procedure of a high-frequency backhaul or access uplink connection according to the invention
- Fig. 3: scenario for mm-wave small cell backhaul downlink establishing or user equipment access downlink establishing
- Fig. 4: setup procedure of a high-frequency backhaul or access downlink connection according to the invention
- Fig. 5: setup procedure of a high-frequency backhaul or access bidirectional connection according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

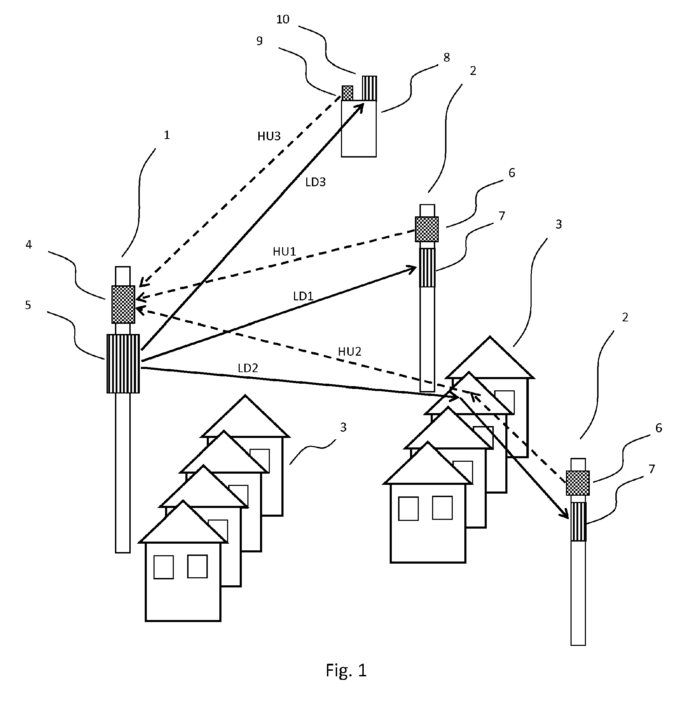

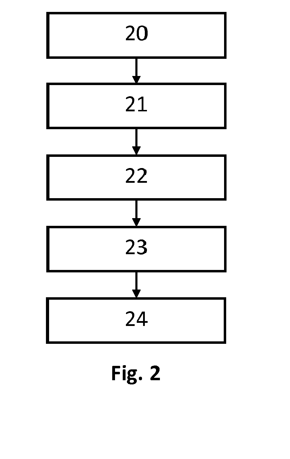

Fig. 1 discloses a scenario for a mm-wave small cell uplink backhaul or mm-wave user equipment uplink access. A macro cell backhaul node 1 is provided. In case of user equipment uplink access, the macro cell backhaul node 1 is equipped with base station functionality and is the base station for the user equipment device 8. The macro cell backhaul node 1 comprises a high-frequency antenna array 4 for communication via a mm-wave frequency, e.g. a 28 GHz antenna array. Further, the macro cell backhaul node 1 comprises a low-frequency antenna 5 for communication on lower frequency, e.g. in the 800 MHz, 1.8 GHz, 2.6 GHz, 3.5 GHz or 5 GHz range. The low-frequency antenna 5 is an antenna array which is controllable e.g. via beamstearing. At least one small cell base station 2 is present in the scenario, providing access points to the network for the users. In case the macro cell backhaul node 1 provides base station functionality, the macro cell backhaul node 1 provides an access point to at least one user equipment 8. The small cell base station 2 comprises a high-frequency antenna array 6, e.g. a 28 GHz antenna array. The user equipment 8 comprises a high frequency antenna array 9. Further, the small cell base stations 2 and the user equipment 8 comprise a low-frequency antenna 7, 10. In one embodiment, the low-frequency antennas 5, 7, 10 are UMTS or LTE antennas, thus this is infrastructure which is available anyway at least in part at the macro cell backhaul node 1 and at the small cell base stations 2 and user equipment 8. Further, buildings 3 and obstacles between some direct connections of the macro cell backhaul node 1 and the small cell base stations 2 or user equipment 8 are present. As described in the following in Fig. 2, a high-frequency backhaul uplink connection HU1, HU2, HU3 between a small cell base station 2 and the macro cell backhaul node 1 or between a user equipment 8 and the macro cell backhaul node 1 providing base station functionality is established. Such connections are either line of sight connections HU1, HU3 or connections HU2 showing only few reflections. A link showing multiple reflections is not suitable for communication on mm-wave frequencies as losses are too high. Further, Fig. 1 shows a low-frequency downlink signal LD1, LD2, LD3 used for determining directional information between the small cell base station 2 and the macro cell backhaul node 1 or between the user equipment 8 and the macro cell backhaul node 1. In one embodiment, the low-frequency downlink signal LD1, LD2, LD3 is a signal especially generated and transmitted in order to determine the directivity of its origin, from the viewpoint of the receiving small cell base station 2 or user equipment 8. In one embodiment, the low-frequency downlink signal LD1, LD2, LD3 is a regular GSM, UMTS or LTE signal or the like. In one embodiment, the low-frequency antenna 5, 7, 10 is co-located to its corresponding high-frequency antenna array 4, 6, 9 at a macro cell backhaul node 1 or at a small cell base station 2 or at a user equipment 8, respectively. If this is the case, the direction of the strongest mm-wave path and the strongest low-frequency path correspond to each other. The strongest high-frequency path and the strongest low-frequency path are the line of sight paths, and if such a line of sight path is not available, the strongest paths are the paths showing only few reflections.

Fig. 2 shows the setup procedure of a high-frequency backhaul uplink connection HU1, HU2, HU3 from the small cell base station 2 or the user equipment 8 to the macro cell backhaul node 1 in a scenario according to Fig. 1. In case the high-frequency backhaul uplink connection HU3 is set up from the user equipment 8, the macro cell backhaul node 1 acts as a base station and provides base station functionality. In step 20, a low-frequency downlink signal LD1, LD2, LD3 originating from the macro cell backhaul node 1 is received at the small cell base station 2 or the user equipment 8. The low-frequency signal is e.g. a UMTS or LTE signal. Frequencies used to transmit the low-frequency signal are e.g. in the 800 MHz, 1.8 GHz, 2.6 GHz, 3.5 GHz or 5 GHz range. In step 21, the angle of arrival at the small cell base station 2 or the user equipment 8 of the low-frequency downlink signal LD1, LD2, LD3 is determined. Therefore, the physical layer signal of the low-frequency downlink signal LD1, LD2, LD3 is evaluated. The angle of arrival is information defining the position of the macro cell backhaul node 1 with regard to the small cell base station 2 or user equipment 8, thus directional information between the small cell base station 2 or user equipment 8 and the macro cell backhaul node 1. From the determined angle of arrival and the corresponding directional information, in step 22 beamforming weights for the high-frequency antenna array 6 of the small cell base station 2 or the high-frequency antenna array 9 of user equipment 8 are calculated. The beamforming weights are parameters to control each single antenna element or groups of antenna elements of the high-frequency antenna array 6, 9 in order to generate an antenna pattern with a high gain in the desired direction. The beamforming weights are calculated e.g. by evaluating the covariance matrix of the antenna elements and calculating the dominant Eigenvectors using singular value decomposition (SVD). In step 23, a high-frequency uplink connection HU1, HU2, HU3 between the small cell base station 2 or the user equipment 8 and the macro cell backhaul node 1 is established. Preferably, this high-frequency backhaul uplink connection HU1, HU2, HU3 is a line of sight connection to ensure high bandwidth data transmissions at high frequencies, e.g. mm-wave frequencies. In one embodiment, during high-frequency communication between the small cell base station 2 or user equipment 8 and the macro cell backhaul node 1, the high-frequency backhaul uplink connection HU1, HU2, HU3 is inspected at the macro cell backhaul node 1. Based on the characteristics of the high-frequency backhaul uplink connection HU1, HU2, HU3, control information is transmitted and is received at the small cell base station 2 or user equipment 8. Based on this information, in step 24, beamforming weights of the high-frequency antenna array 6, 9 of the small cell base station 2 or the user equipment 8 are optimized during data transmission.

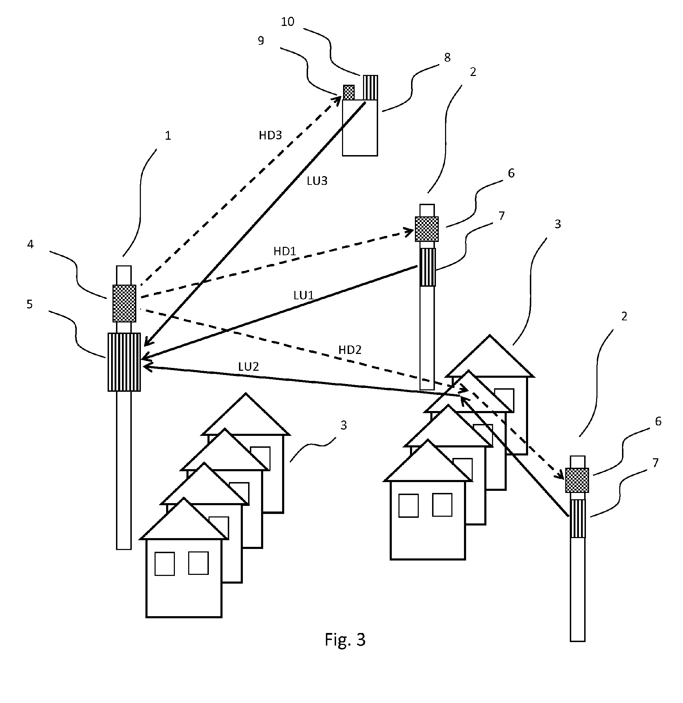

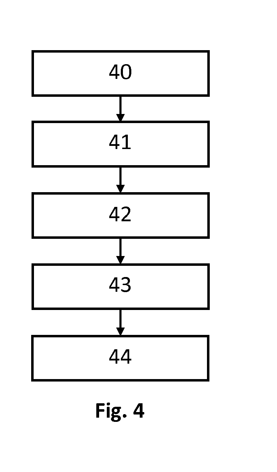

Fig. 3 discloses a scenario for a mm-wave small cell downlink backhaul or mm-wave user equipment downlink access. A macro cell backhaul node 1 is provided. In case of user equipment downlink access, the macro cell backhaul node 1 is equipped with base station functionality and is the base station for the user equipment device 8. The macro cell backhaul node 1, the small cell base stations 2 and the user equipment 8 with corresponding high-frequency antenna arrays 4, 6, 9 and low-frequency antennas 5, 7, 10 correspond to the scenario as described in Fig. 1. As described in the following in Fig. 4, a high-frequency backhaul downlink connection HD1, HD2, HD3 between the macro cell backhaul node 1 and a small cell base station 2 or user equipment 8 is established. Such connections are either line of sight connections HD1, HD3 or connections HD2 showing only few reflections. A link showing multiple reflections is not suitable for communication on mm-wave frequencies as losses are too high. Further, Fig. 3 shows a low-frequency uplink signal LU1, LU2, LU3 used for determining directional information between the small cell base station 2 or user equipment 8 and the macro cell backhaul node 1. In one embodiment, the low-frequency uplink signal LU1, LU2, LU3 is a signal especially generated and transmitted in order to determine the directivity of its origin, from the viewpoint of the receiving marco cell backhaul node 1. In one embodiment, the low-frequency uplink signal LU1, LU2, LU3 is a regular GSM, UMTS or LTE signal or the like. In one embodiment, the low-frequency antenna 5, 7, 10 is co-located to its corresponding high-frequency antenna array 4, 6, 9 at a macro cell backhaul node 1, at a small cell base station 2 or at a user equipment 8, respectively. If this is the case, the direction of the strongest mm-wave path and the strongest low-frequency path correspond to each other. The strongest high-frequency path and the strongest low-frequency path are the line of sight paths, and if such a line of sight path is not available, the strongest paths are the paths showing only few reflections.

Fig. 4 shows the setup procedure of a high-frequency backhaul downlink connection HD1, HD2, HD3 from the macro cell backhaul node 1 to the small cell base station 2 or user equipment 8 in a scenario according to Fig. 3. In step 40, a low-frequency uplink signal LU1, LU2, LU3 originating from the small cell base station 2 or user equipment 8 is received at the macro cell backhaul node 1. The low-frequency signal is e.g. a UMTS or LTE signal. Frequencies used to transmit the low-frequency signal are e.g. in the 800 MHz, 1.8 GHz, 2.6 GHz, 3.5 GHz or 5 GHz range. In step 41, the angle of arrival at the macro cell backhaul node 1 of the low-frequency uplink signal LU1, LU2, LU3 is determined. Therefore, the physical layer signal of the low-frequency uplink signal LU1, LU2, LU3 is evaluated. The angle of arrival is information defining the position of the macro cell backhaul node 1 with regard to the small cell base station 2 or user equipment 8, thus directional information between the small cell base station 2 or user equipment 8 and the macro cell backhaul node 1. From the determined angle of arrival and the corresponding directional information, in step 42, beamforming weights for the high-frequency antenna array 4 of the macro cell backhaul node 1 are calculated. The beamforming weights are parameters to control each single antenna element or groups of antenna elements of the high-frequency antenna array 4 in order to generate an antenna pattern with a high gain in the desired direction. The beamforming weights are calculated e.g. by evaluating the covariance matrix of the antenna elements and calculating the dominant Eigenvectors using singular value decomposition (SVD). In step 43, a high-frequency downlink connection HD1, HD2, HD3 between the macro cell backhaul node 1 and the small cell base station 2 or user equipment 8 is established. Preferably, this high-frequency backhaul downlink connection HD1, HD2, HD3 is a line of sight connection to ensure high bandwidth data transmissions at high frequencies, e.g. mm-wave frequencies. In one embodiment, in step 44, during high-frequency communication between the macro cell backhaul node 1 and the small cell base station 2 or user equipment 8, the high-frequency backhaul downlink connection HD1, HD2, HD3 is inspected at the small cell base station 2 or user equipment 8. Based on the characteristics of the high-frequency backhaul downlink connection HD1, HD2, HD3, control information is transmitted to the macro cell backhaul node 1. Based on this information, beamforming weights of the high-frequency antenna array 4 of the macro cell backhaul node 1 are optimized during data transmission.

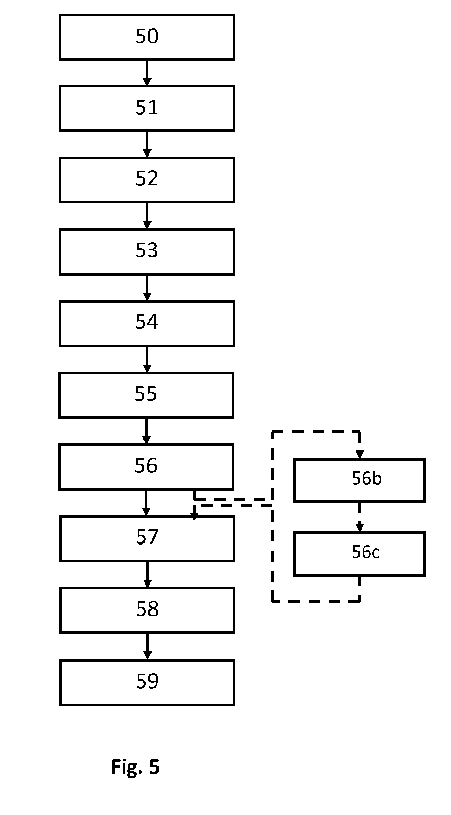

Fig. 5 discloses a method for establishment of a mm-wave link showing the interaction between the macro cell backhaul node 1 and a small cell base station 2 or user equipment 8. In step 50, a low-frequency downlink signal LD1, LD2, LD3 originating from the macro cell backhaul node 1 is received at the small cell base station 2 or user equipment 8. The low-frequency signal is e.g. a UMTS or LTE signal. Frequencies used to transmit the low-frequency signal are e.g. in the 800 MHz, 1.8 GHz, 2.6 GHz, 3.5 GHz or 5 GHz range. In step 51, the angle of arrival at the small cell base station 2 or user equipment 8 of the low-frequency downlink signal LD1, LD2, LD3 is determined. Therefore, the physical layer signal of the low-frequency downlink signal LD1, LD2, LD3 is evaluated. The angle of arrival is information defining the position of the macro cell backhaul node 1 with regard to the small cell base station 2 or user equipment 8, thus directional information between the small cell base station 2 or user equipment 8 and the macro cell backhaul node 1. From the determined angle of arrival and the corresponding directional information, in step 52, beamforming weights for the high-frequency antenna array 6, 9 of the small cell base station 2 or user equipment 8, respectively, are calculated. The beamforming weights are parameters to control each single antenna element or groups of antenna elements of the high-frequency antenna array 6, 9 in order to generate an antenna pattern with a high gain in the desired direction. The beamforming weights are calculated e.g. by evaluating the covariance matrix of the antenna elements and calculating the dominant Eigenvectors using singular value decomposition (SVD). In step 53, a low-frequency uplink signal LU1, LU2, LU3 is transmitted by the small cell base station 2 or user equipment 8 to the macro cell backhaul node 1. In step 54, the macro cell backhaul node 1 receives the low-frequency uplink signal LU1, LU2, LU3 from the small signal base station 2 or user equipment 8. In step 55, the angle of arrival at the macro cell backhaul node 1 of the low-frequency uplink signal LU1, LU2, LU3 is determined. Therefore, the physical layer signal of the low-frequency uplink signal LU1, LU2, LU3 is evaluated. The angle of arrival is information defining the position of the small cell base station 2 or user equipment 8 with regard to the macro cell backhaul node 1, thus directional information between the macro cell backhaul node 1 and the small cell base station 2 or user equipment 8. From the determined angle of arrival and the corresponding directional information, in step 56, beamforming weights for the high-frequency antenna array 4 of the macro cell backhaul node 1 are calculated. The beamforming weights are parameters to control each single antenna element or groups of antenna elements of the high-frequency antenna array 4 in order to generate an antenna pattern with a high gain in the desired direction. The beamforming weights are calculated e.g. by evaluating the covariance matrix of the antenna elements and calculating the dominant Eigenvectors using singular value decomposition (SVD). In step 57, a high-frequency downlink connection HD1, HD2, HD3 between the macro cell backhaul node 1 and the small cell base station 2 or user equipment 8 and/or a high-frequency uplink connection HU1, HU2, HU3 between the small cell base station 2 or user equipment 8 and the macro cell backhaul node 1 is established. Preferably, the high-frequency backhaul downlink connection HD1, HD2, HD3 and the high-frequency backhaul uplink connection HU1, HU2, HU3 are line of sight connections to ensure high bandwidth data transmissions at high frequencies, e.g. mm-wave frequencies. In one embodiment, in step 58, during high-frequency communication between the macro cell backhaul node 1 and the small cell base station 2 or user equipment 8, the high-frequency backhaul downlink connection HD1, HD2, HD3 is inspected at the small cell base station 2 or user equipment 8. Control information is generated and transmitted to the macro cell backhaul node 1, so that beamforming weights of the high-frequency antenna array 4 of the macro cell backhaul node 1 are optimized during data transmission. In one embodiment, in step 59, during high-frequency communication between the small cell base station 2 or user equipment 8 and the macro cell backhaul node 1, the high-frequency backhaul uplink connection HU1, HU2, HU3 is inspected at the macro cell backhaul node 1. Control information is generated and transmitted to the small cell base station 2 or user equipment 8, so that beamforming weights of the high-frequency antenna array 6, 9 of the small cell base station 2 or user equipment 8 are optimized during data transmission. The gain of the high-frequency antenna arrays 4, 6, 9 using the initial beamforming weights calculated in steps 52 and 56 is high enough to guarantee a high SNR. Thus, the optimization of the beamforming weights in steps 58 and 59 is performed without further evaluating the low-frequency signals LD1, LD2, LD3, LU1, LU2, LU3. It has to be noted that in the above example, first the low-frequency downlink signal LD1, LD2, LD3 is evaluated and afterwards the low-frequency uplink signal LU1, LU2, LU3 is evaluated. In one embodiment, these steps are executed in reverse order.

In one embodiment, the small cell base station 2 or user equipment 8 has a fixed low-frequency antenna which does not provide spatial discrimination like and antenna array. Thus, steps 50 to 52 are not performed. The method starts with step 53 and steps 53 to 56 are performed as described above. In step 56b, the angel of arrival information available at the macro cell backhaul node 1 is transmitted to the small cell base station 2 or user equipment 8 with the low-frequency signal (LD1, LD2, LD3). The small cell base station 2 or user equipment 8 uses this information to calculate the angle of arrival of the low-frequency signal (LD1, LD2, LD3) at the small cell base station 2 or user equipment 8 in step 56c.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for determining beamforming weights for an antenna array, comprising the steps:
- receiving (20 ,40, 50, 54) a low-frequency signal (LD1, LD2, LD3 LU1, LU2, LU3);
- determining (21, 41, 51, 55) the angle of arrival of the received signal (LD1, LD2, LD3, LU1, LU2, LU3); and
- calculating (22, 42, 52, 56) beamforming weights for a high-frequency antenna array (4, 6, 10) from the determined angle of arrival.

2. Method for determining beamforming weights for an antenna array according to claim 1, further comprising the step:
- establishing (23, 43, 57, 58) a high-frequency communication link (HU1, HU2, HU3, HD1, HD2, HD3) using the calculated beamforming weights.

3. Method for determining beamforming weights for an antenna array according claim 2, wherein the high-frequency communication link (HU1, HU2, HU3, HD1, HD2, HD3) is a line of sight communication link.

4. Method for determining beamforming weights for an antenna array according to one of claims 2 to 3, wherein the high-frequency communication link (HU1, HU2, HU3, HD1, HD2, HD3) is a backhaul link between a small cell base station (2) and a macro cell backhaul node (1) or an access link between a user equipment (8) and a macro cell backhaul node (1) with base station functionality.

5. Method for determining beamforming weights for an antenna array according to one of claims 1 to 4, wherein the beamforming weights are determined by the received physical layer signal.

6. Method for determining beamforming weights for an antenna array according to one of claims 1 to 5, wherein spatial directions located nearby the determined angle of arrival are scanned at the frequency of the high-frequency signal (HU1, HU2, HU3, HD1, HD2, HD3), and
calculating (24, 44, 59) updated beamforming weights for the high-frequency antenna array (4, 6, 9) from the scanned spatial directions.

7. Method for determining beamforming weights for an antenna array according to one of claims 1 to 6, further comprising the step of
receiving control information generated at a transmitter by inspecting the high-frequency communication link (HU1, HU2, HU3, HD1, HD2, HD3);
calculating (24, 44, 58, 59) updated beamforming weights from the received control information for the high-frequency antenna array (4, 6, 10).

8. Method for determining beamforming weights for an antenna array according to one of claims 1 to 7, wherein the low-frequency signal (LD1, LD2, LD3, LU1, LU2, LU3) is an UMTS or LTE signal and the high-frequency signal (HU1, HU2, HU3, HD1, HD2, HD3) is a mm-wave signal..

9. Method for determining beamforming weights for an antenna array according to one of claims 1 to 8, wherein the method is performed in one or more of a small cell base station (2), a user equipment (8) and a macro cell base station (1).

10. Method for determining beamforming weights for an antenna array according to one of claims 1 to 9, wherein the received low-frequency signal (LD1, LD2, LD3 LU1, LU2, LU3) includes location information of the transmitter of the received low-frequency signal (LD1, LD2, LD3 LU1, LU2, LU3) and the step of determining the angle of arrival of the received signal (LD1, LD2, LD3, LU1, LU2, LU3) includes using (56c) the received location information of the transmitter of the received low-frequency signal (LD1, LD2, LD3 LU1, LU2, LU3) for determining the angle of arrival.

11. Macro base station (1) comprising:
- a low-frequency antenna (5) and a low-frequency receiver for receiving a low-frequency signal (LU1, LU2, LU3),
- an angle of arrival determining means for determining the angle of arrival of a received signal (LU1, LU2, LU3),
- a high-frequency antenna array (4), and
- a processor for calculating beamforming weights for the high-frequency antenna (4) from the determined angle of arrival.

12. Small cell base station (2)comprising
- a low-frequency antenna (7) and a low-frequency receiver for receiving a low-frequency signal (LD1, LD2),
- an angle of arrival determining means for determining the angle of arrival of a received signal (LD1, LD2),
- a high-frequency antenna array (6), and
- a processor for calculating beamforming weights for the high-frequency antenna (6) from the determined angle of arrival.

13. User equipment (8) comprising
- a low-frequency antenna (10) and a low-frequency receiver for receiving a low-frequency signal (LD3),
- an angle of arrival determining means for determining the angle of arrival of a received signal (LD3),
- a high-frequency antenna array (9), and
- a processor for calculating beamforming weights for the high-frequency antenna (9) from the determined angle of arrival.

14. System comprising a macro base station according to claim 11 and at least a small cell base station according to claim 12 or a user equipment according to claim 13.
